# EUROPEAN PATENT APPLICATION

(11) **EP 4 844 879 A1**
(43) Date of publication of application: **25.11.2026**
(21) Application number: 25863936.8
(22) Date of filing: 22.08.2025
(51) Int. Cl.: H01M 10/058, H01M 10/052, H01M 50/469, H01M 50/414, H01M 50/102, H01M 10/0564

(54) **CABLE-TYPE SECONDARY BATTERY**

(30) Priority: 03.09.2024 KR 20240119497
(71) Applicant: LG Energy Solution, Ltd., Seoul 07335 (KR)
(72) Inventor: YI, Min Jeong, Daejeon 34122 (KR); KIM, Ji Hyun, Daejeon 34122 (KR); WON, Sang Yeon, Daejeon 34122 (KR); AHN, Byung Sun, Daejeon 34122 (KR)
(74) Representative: Hoffmann Eitle
(86) International application number: PCT/KR2025/012833
(87) International publication number: WO 2026/054387

(57) **Abstract**

A cable-type secondary battery includes a separator having a corrugated tube structure, a first electrode extending within the separator having the corrugated tube structure, and a second electrode surrounding the separator having the corrugated tube structure and extending along the first electrode. The cable-type secondary battery is simple to manufacture and has excellent formability into a desired shape.

## Description

### [Technical Field]

The present disclosure relates to a cable-type secondary battery, and more specifically, to a cable-type secondary battery that is simple to manufacture and has excellent formability into a desired shape.

This application claims the benefit of Korean Patent Application No. 10-2024-0119497, filed on September 3, 2024, the disclosure of which is incorporated herein by reference.

### [Background]

In general, most secondary batteries are cylindrical, prismatic, or pouch-type batteries. This is because secondary batteries are manufactured by mounting an electrode assembly composed of a negative electrode, a positive electrode, and a separator inside a cylindrical or prismatic metal can or a pouch-type case made of an aluminum laminate sheet, and injecting an electrolyte into the electrode assembly. Therefore, since a certain space for mounting the secondary battery is essentially required, the cylindrical, prismatic, or pouch-type form of such secondary batteries acts as a constraint on the development of various types of portable devices. Accordingly, there is a need for a novel type of secondary battery that can be easily deformed.

### [Technical Problem]

An object of the present disclosure is to provide a cable-type secondary battery that is simple to manufacture and has excellent formability into a desired shape.

### [Technical Solution]

In order to achieve the above technical object, the present disclosure provides a cable-type secondary battery including: a separator having a corrugated tube structure; a first electrode extending within the separator of the tube structure; and a second electrode surrounding the separator of the tube structure and extending along the first electrode.

In some aspects, the separator may be adhered to the first electrode by heat shrinkage.

In some aspects, the separator may be corrugated in a direction perpendicular to the extension direction of the separator.

In some aspects, the separator may include a portion where a cross-section cut in the extension direction of the first electrode is overlapped in a Z-shape.

In some aspects, the separator may be continuous by repeating the overlapping portions with a Z-shaped cross-section cut in the extension direction of the first electrode.

In some aspects, the separator extends from one end to the other end of the cable-type secondary battery and may have a corrugated tube structure for a portion of the total extension length.

In some aspects, the corrugated tube structure may be a body of revolution obtained by rotating one side of a cross-section of the separator cut in the extension direction of the separator about a central axis.

In some aspects, the separator of the corrugated tube structure may not be spirally wound.

In some aspects, the cable-type secondary battery further includes a flexible support inside the first electrode, wherein the first electrode may be configured to surround and extend spirally around the flexible support.

In some aspects, the cable-type secondary battery may further include a packaging spirally wound surrounding the outer periphery of the second electrode.

Another aspect of the present disclosure provides a cable-type secondary battery including: a cable-type electrode assembly extending in a longitudinal direction and including a first electrode, a second electrode, and a separator provided between the first electrode and the second electrode; a packaging surrounding the outer periphery of the cable-type electrode assembly; and an electrolyte provided in the packaging, wherein the separator has a tube structure corrugated in a direction perpendicular to the longitudinal direction.

In some aspects, the separator may include polypropylene, polyethylene, polyester, polyacetal, polyamide, polycarbonate, polyimide, polyetheretherketone, polyethersulfone, polyphenylene oxide, polyphenylene sulfide, polyethylene naphthalate, ethylene-butene copolymer, ethylene-hexene copolymer, or ethylene-methacrylate copolymer.

In some aspects, the separator may include a portion in which a cross-section cut in the extension direction of the separator has a sawtooth shape.

In some aspects, the separator includes repeating units repeated in the longitudinal direction, wherein each of the repeating units includes: a first portion having a first slope with respect to the longitudinal direction; and a second portion having a second slope that is gentler than the first slope with respect to the longitudinal direction, wherein the first portion and the second portion may be connected adjacent to each other.

In some aspects, the separator is adhered to the outside of the first electrode by heat shrinkage, and the first portion and the second portion may respectively have a third slope and a fourth slope that are steeper than the first slope and the second slope before the heat shrinkage.

### [Advantageous Effects]

The cable-type secondary battery of the present disclosure is simple to manufacture and has excellent formability into a desired shape.

The effects that can be obtained from the exemplary aspects of the present disclosure are not limited to the effects mentioned above, and other effects not mentioned can be clearly derived and understood by a person having ordinary knowledge in the technical field to which the exemplary aspects of the present disclosure belong from the following description. In other words, unintended effects of practicing the exemplary aspects of the present disclosure can also be derived from the exemplary aspects of the present disclosure by a person having ordinary knowledge in the technical field.

### [Brief Description of the Drawings]

FIG. 1 is a perspective view showing a cable-type secondary battery according to an aspect of the present disclosure.
FIG. 2 is a partial cross-sectional view showing a cross-section of the separator of the cable secondary battery cut along the longitudinal direction of the first electrode.
FIG. 3 is a perspective view showing the repeating unit.
FIG. 4 is a cross-sectional view showing the appearance of the separator before heat shrinkage.

### [Detailed Description]

Hereinafter, preferred aspects of the concept of the present disclosure will be described in detail with reference to the accompanying drawings. However, the aspects of the concept of the present disclosure may be modified in various other forms, and it should not be construed that the scope of the present disclosure concept is limited by the aspects described below. It is preferred that the aspects of the present disclosure concept be interpreted as being provided to more fully explain the concept of the present disclosure to one of ordinary skill in the art. Like designations generally refer to like elements. Furthermore, the various elements and areas in the drawings are schematically depicted. Accordingly, the concepts of the present disclosure are not limited by the relative sizes or spacing depicted in the accompanying drawings.

Terms such as first, second, and the like may be used to describe various components, but the components are not limited by such terms. These terms are used only for the purpose of distinguishing one component of from another. For example, a first component may be named a second component, and vice versa, a second component may be named a first component, without departing from the scope of the present disclosure concept.

The terms used in this application are intended to describe specific aspects only and is not intended to limit the concept of the present disclosure. Expressions in the singular include the plural unless the context clearly indicates otherwise. In this application, expressions such as "includes" or "has" are intended to designate the presence of the features, counts, steps, operations, components, parts, or combinations thereof described herein, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the technical field to which the present disclosure concept belongs. It will also be understood that terms such as commonly used, dictionary-defined terms are to be construed to have a meaning consistent with their meaning in the context of the art to which they relate, and are not to be construed in an unduly formal sense unless expressly defined herein.

Certain sequences of processes may be performed differently from the order in which they are described when certain aspects are otherwise practicable. For example, two processes described in succession may be performed substantially simultaneously, or they may be performed in an order opposite to the order described.

In the accompanying drawings, variations of the illustrated shapes may be expected, for example, depending on manufacturing techniques and/or tolerances. Accordingly, aspects of the present disclosure should not be construed as limited to the specific geometry of the areas shown herein, and should include, for example, variations in geometry resulting from the manufacturing process. All terms "and/or" used herein include each and every combination of one or more of the components mentioned. Further, the term "substrate" as used herein may refer to the substrate itself, or to a laminated structure including the substrate and any predetermined layers or films formed on its surface. Further, the term "surface of the substrate" as used herein may refer to an exposed surface of the substrate itself, or an outer surface of a predetermined layer or film formed on the substrate.

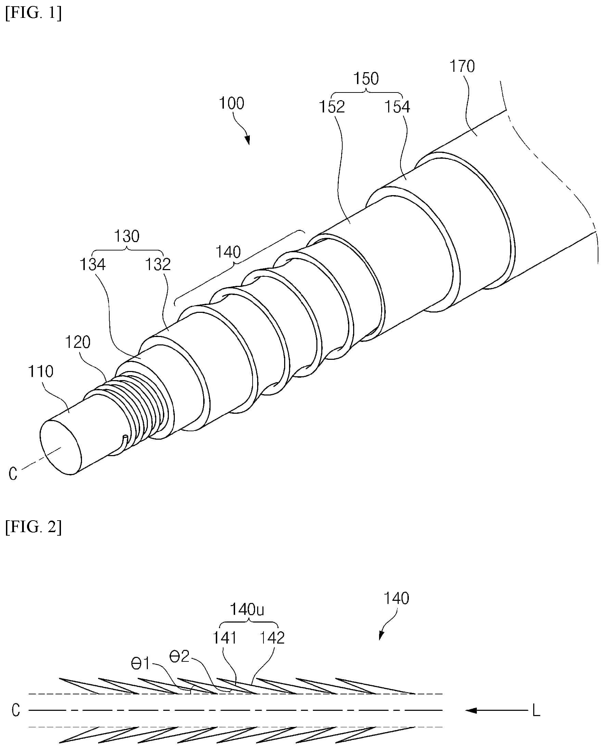

FIG. 1 is a perspective view showing a cable-type secondary battery 100 according to an aspect of the present disclosure. FIG. 2 is a partial cross-sectional view showing a cross-section of the separator 140 of the cable secondary battery 100 cut along the longitudinal direction of the first electrode 130.

Referring to FIGS. 1 and 2, the cable-type secondary battery 100 includes a separator 140 having a corrugated tube structure, a first electrode 130 extending within the separator 140, and a second electrode 150 surrounding the separator 140 and extending along the first electrode 130. The first electrode 130, separator 140, and second electrode 150 may form a cable-type electrode assembly.

The first electrode 130 is either a positive electrode or a negative electrode, and the second electrode 150 is the other of the positive electrode and the negative electrode. Hereinafter, a case where the first electrode 130 is a positive electrode and the second electrode 150 is a negative electrode will be described. Those skilled in the art will be able to easily infer the configuration in which the first electrode 130 is a negative electrode and the second electrode 150 is a positive electrode from the following content.

### First Electrode 130

The first electrode 130 may include a positive electrode current collector 134 and a positive electrode active material layer 132 provided on a surface thereof.

The positive electrode current collector 134 may include, for example, stainless steel, aluminum, nickel, titanium, sintered carbon or copper; stainless steel surface-treated with carbon, nickel, titanium or silver; an aluminum-cadmium alloy; a non-conductive polymer surface-treated with a conductive material; or a conductive polymer.

In order to increase the surface area of the positive electrode current collector 134, a plurality of indented parts may be formed on at least one surface. At this time, the plurality of indented parts may have a continuous pattern or may have an intermittent pattern. That is, it may have indented parts with a continuous pattern formed at spacings in the longitudinal direction, or may have an intermittent pattern in which a plurality of holes are formed. The plurality of holes may be circular or polygonal.

The positive electrode current collector 134 serves to collect electrons generated by the electrochemical reaction of the active material or supply electrons necessary for the electrochemical reaction, and generally metals such as copper or aluminum can be used. In particular, when using a polymer conductor made of a non-conductive polymer surface-treated with a conductive material or a conductive polymer, flexibility is relatively superior compared to when using a metal such as copper or aluminum. In addition, by using a polymer current collector instead of a metal current collector, weight reduction of the battery can be achieved.

As the conductive material, polyacetylene, polyaniline, polypyrrole, polythiophene, polysulfur nitride, ITO (Indium Tin Oxide), silver, palladium, and nickel are possible, and as the conductive polymer, polyacetylene, polyaniline, polypyrrole, polythiophene, and polysulfur nitride can be used. However, the type of non-conductive polymer used in the current collector is not particularly limited.

The positive electrode active material layer 132 may include, for example, any one active material particle or a mixture of two or more thereof selected from the group consisting of LiCoO₂, LiNiO₂, LiMn₂O₄, LiCoPO₄, LiFePO₄, and LiNi_{1-x-y-z}CoₓM1_{y}M2_{z}O₂ (where M1 and M2 are each independently selected from the group consisting of Al, Ni, Co, Fe, Mn, V, Cr, Ti, W, Ta, Mg, and Mo, and x, y, and z are each independently means atomic fraction of the element constituting the oxide composition, and satisfies 0≤x<0.5, 0≤y<0.5, 0≤z<0.5, 0< x+y+z≤1). However, the present disclosure is not limited thereto.

### Second Electrode 150

The second electrode 150 may include a negative electrode current collector 154 and a negative electrode active material layer 152 provided on a surface thereof.

The negative electrode current collector 154 may be made of stainless steel, aluminum, nickel, titanium, sintered carbon or copper; stainless steel surface-treated with carbon, nickel, titanium or silver; an aluminum-cadmium alloy; a non-conductive polymer surface-treated with a conductive material; a conductive polymer; a paste containing a powder of Ni, Al, Au, Ag, Al, Pd-Ag, Cr, Ta, Cu, Ba, or ITO; or a carbon paste containing carbon powder such as graphite, carbon black, or carbon nanotubes. At this time, the conductive material and conductive polymer may be the same as those used in the above-mentioned positive electrode current collector 134.

The negative electrode active material layer 152 may include any one active material particle or a mixture of two or more thereof selected from the group consisting of natural graphite, artificial graphite, or carbon-based materials; lithium-containing titanium composite oxide (LTO), metals (M) such as Si, Sn, Li, Zn, Mg, Cd, Ce, Ni, or Fe; alloys composed of the metals (M); oxides (MOx) of the metals (M); and composites of the metals (M) with carbon.

At least one of the first electrode 130 and the second electrode 150 may further include a primer coating layer. The primer coating layer may improve adhesion between the active material layers 132, 152 and the current collectors 134, 154. In some aspects, the primer coating layer may include a conductive material and a binder.

The conductive material may include any one or a mixture of two or more selected from the group consisting of carbon black, acetylene black, Ketjen black, carbon fiber, carbon nanotubes, and graphene.

The binder may be any one or a mixture of two or more selected from the group consisting of polyvinylidene fluoride (PVDF), polyvinylidene fluoride-co-hexafluoropropylene, polyvinylidene fluoride-co-trichloroethylene, polybutyl acrylate, polymethyl methacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinyl alcohol, cyanoethylcellulose, cyanoethylsucrose, pullulan, carboxyl methyl cellulose, styrene-butadiene rubber, acrylonitrile-styrene-butadiene copolymer, and polyimide.

### Separator 140

The separator 140 may be any material used as a separator for secondary batteries. In some aspects, a material that can be shrunk by heat may be used for the separator 140. In some aspects, the separator 140 may include polypropylene, polyethylene, polyester, polyacetal, polyamide, polycarbonate, polyimide, polyetheretherketone, polyethersulfone, polyphenylene oxide, polyphenylene sulfide, polyethylene naphthalate, ethylene-butene copolymer, ethylene-hexene copolymer, or ethylene-methacrylate copolymer.

The separator 140 may have a corrugated tube structure. As shown in FIG. 1, the corrugations of the tube structure may be corrugated in a direction substantially perpendicular to the extension direction of the separator 10.

The separator 140 may have repeating units 140u repeated in the longitudinal direction L. Here, the longitudinal direction L does not necessarily mean only a specific direction on a coordinate axis, but means any direction in which the separator 140 extends. If the separator 140 extends in a straight direction, the direction along the straight line is the longitudinal direction L, and if it extends in a curved direction, the direction along the curve may be the longitudinal direction L.

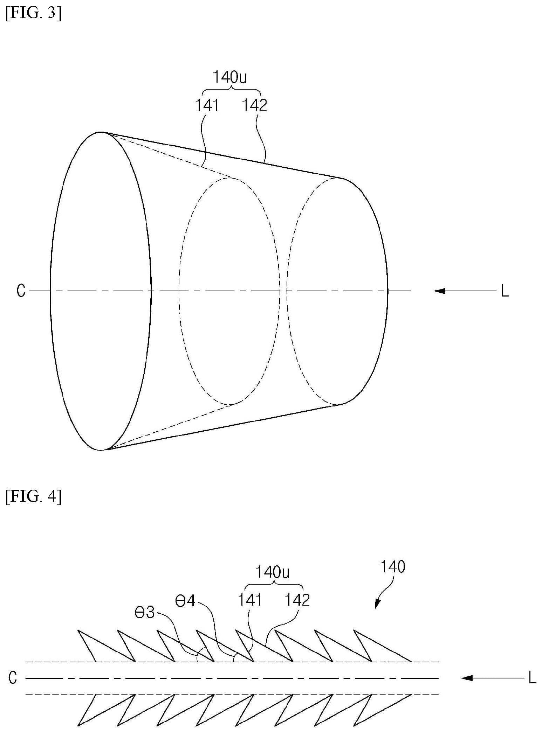

FIG. 3 is a perspective view showing the repeating unit 140u.

Referring to FIG. 3, the repeating unit 140u may be a body of revolution obtained by rotating one side of a cross-section cut in the extension direction of the separator 140 about a central axis C. Each of the repeating units 140u forming the separator 140 may form such a body of revolution. The body of revolution may be continuously repeated along the extension direction L of the separator 10.

Furthermore, the separator 140 may not be a ribbon-shaped separator wound in a spiral form along the longitudinal direction L.

In some aspects, the separator 140 may have a sawtooth shape in a cross-section cut in the extension direction L of the separator 140. In some aspects, the separator 140 may have a zigzag shape in a cross-section cut in the extension direction L of the separator 140. In some aspects, the separator 140 may have a Z-shape in a cross-section cut in the extension direction L of the separator 140.

The repeating unit 140u of the separator 140 may include a first portion 141 and a second portion 142 having different slopes with respect to the longitudinal direction L. The first portion 141 may have a first slope θ1 with respect to the longitudinal direction L. The second portion 142 may have a second slope θ2 with respect to the longitudinal direction L. The first slope θ1 may be greater than the second slope θ2, and the second slope θ2 may be gentler than the first slope θ1 with respect to the longitudinal direction L.

Although the portion where the first portion 141 and the second portion 142 meet is shown as sharp in FIGS. 2 and 3, this is for convenience of illustration, and the present disclosure is not limited thereto. In some aspects, the portion where the first portion 141 and the second portion 142 meet may include a curved surface.

In some aspects, the separator 140 may be formed by a heat shrinkage process. FIG. 4 is a cross-sectional view showing the appearance of the separator 140 before heat shrinkage.

Referring to FIGS. 2 and 4, the first portion 141 and the second portion 142 of the separator 140 before heat shrinkage may have greater slopes with respect to the longitudinal direction L compared to the first portion 141 and the second portion 142 after heat shrinkage. Specifically, the first portion 141 may have a third slope θ3 before heat shrinkage, and the third slope θ3 may have a steeper inclination compared to the first slope θ1 after heat shrinkage. In addition, the second portion 142 may have a fourth slope θ4 before heat shrinkage, and the fourth slope θ4 may have a steeper inclination compared to the second slope θ2 after heat shrinkage.

The separator 140 may extend from one end to the other end of the cable-type secondary battery 100. In some aspects, the separator 140 may have the corrugated tube structure over its entire length. Since it has the corrugated tube structure over the entire length of the separator 140, sufficient flexibility can be secured for any deformation.

In some aspects, the separator 140 may have the corrugated tube structure for a portion of the total extension length. Since it has the corrugated tube structure for a necessary portion of the total extension length, manufacturing cost is low and weight reduction is possible.

The separator 140 may be adhered to the outside of the first electrode 130 by heat shrinkage.

### Packaging 170

The cable-type electrode assembly may be covered by a packaging 170 surrounding its outer periphery.

The packaging 170 may be configured to surround the outer periphery of the second electrode 150 as an insulator to protect the cable-type electrode assembly from moisture in the air and external impacts. In some aspects, common polymer resins such as PVC, HDPE, or epoxy resin may be used as the packaging 170.

The packaging 170 may be wound spirally surrounding the outer periphery of the second electrode 150. In some aspects, the packaging 170 may be wound while in contact with the second electrode 150. In other aspects, the packaging 170 may be wound surrounding the outer periphery of the second electrode 150 with another layer interposed.

### Support 120

In some aspects, the cable-type secondary battery 100 may further include a support 120 inside the first electrode 120.

The support 120 may have an open structure with a space formed therein, that is, an electrolyte diffusion channel may be formed on a surface facing the first electrode 130. An open structure refers to a structure in which the structure serves as a boundary surface, and the movement of substances from inside to outside through this boundary surface is free. As a result, entry and exit of electrolyte in both the direction from the inside of the support 120 toward the first electrode 130 and the direction from the first electrode 130 toward the inside of the support 120 may be easy.

The support 120 with such an open structure may be one or more wires wound spirally, one or more sheets wound spirally, a hollow fiber, or a mesh-type support. In some aspects, the support 120 may have flexibility. In some aspects, the support 120 may have pores on its surface that enable the electrolyte to move freely to the active material of the first electrode 130 and the active material of the second electrode 150.

In some aspects, the wound wire-type support 120 may be formed in a shape such as a spring structure composed of polymer or metal. At this time, the polymer may be made of a material with excellent chemical resistance that does not react with the electrolyte, and examples thereof may be the same as the material of the hollow fiber described below or the examples of the binder polymer described above. In addition, the same metal as that constituting the current collectors 134, 154 described above may be used.

In some aspects, the hollow fiber may be obtained using one or more polymers selected from the group consisting of polyethylene, polypropylene, polytetrafluoroethylene, polyvinylidene fluoride, polyacrylonitrile, polyimide, polyethylene terephthalate, polyamide imide, polyester imide, polyether sulfone, and polysulfone, using a conventional hollow fiber formation method.

The support 120 with an open structure maintains the linear shape of the cable-type secondary battery 100, can prevent unwanted deformation of the battery structure by external forces, and can prevent collapse or deformation of the electrode structure, thereby securing flexibility of the cable-type secondary battery 100.

In some aspects, the support 120 may have a structure with no empty space inside, and examples thereof may be a linear wire or a twisted wire. Such linear wires or twisted wires may also be formed from the above-mentioned polymer or metal. At this time, a linear wire refers to a wire form extending linearly in the longitudinal direction, and a twisted wire refers to a wire form in which such linear wires are twisted without forming an internal space.

In some aspects, the support 120 may have a diameter of about 0.1 mm to about 10 mm. In some aspects, the support 120 may have pores having an average diameter of about 100 nm to about 10 µm on the surface.

In some aspects, the first electrode 130 may extend along the support 120. In some aspects, the first electrode 130 may extend along the support 120 while surrounding the support 120. In some aspects, the first electrode 130 may have a form extending in a ribbon shape and may extend while wrapping the support 120 in a spiral form.

In some aspects, the second electrode 150 may extend along the separator 140. In some aspects, the second electrode 150 may extend along the separator 140 while surrounding the separator 140. In some aspects, the second electrode 150 may have a form extending in a ribbon shape and may extend while wrapping the separator 140 in a spiral form.

### Lithium Ion Supply Core Part 110

In some aspects, the lithium ion supply core part 110 may include a gel-type polymer electrolyte and a support. In some aspects, the lithium ion supply core part 110 may include a liquid electrolyte and a porous carrier.

In some aspects, the lithium ion supply core part 110 may include an electrolyte. The type of electrolyte is not particularly limited, but non-aqueous electrolytes using ethylene carbonate (EC), propylene carbonate (PC), butylene carbonate (BC), vinylene carbonate (VC), diethyl carbonate (DEC), dimethyl carbonate (DMC), ethyl methyl carbonate (EMC), methyl formate (MF), gamma-butyrolactone (γ-butyrolactone), sulfolane, methyl acetate (MA), or methyl propionate (MP); gel-type polymer electrolytes using poly(ethylene oxide) (PEO), polyvinylidene fluoride (PVdF), poly(vinylidene fluoride-co-hexafluoropropylene) (PVdF-HFP), polymethyl methacrylate (PMMA), polyacrylonitrile (PAN), or polyvinyl acetate (PVAc); or solid electrolytes using PEO, polypropylene oxide (PPO), polyethylene imine (PEI), polyethylene sulphide (PES), or PVAc may be used. And such electrolytes may further include lithium salts, which may be LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, lithium lower aliphatic carboxylate, and lithium tetraphenyl borate.

In some aspects, the lithium ion supply core part 110 may be composed only of an electrolyte. In some aspects, when the electrolyte is liquid, the electrolyte may be used by being wet on a porous carrier.

### Manufacturing Method

A polymer electrolyte is formed into a wire form using an extruder or the like to prepare the lithium ion supply core part 110. Alternatively, after preparing a support 120 with an empty center, the lithium ion supply core part 110 may be formed by injecting a non-aqueous electrolyte into the center of the support 120.

Alternatively, the lithium ion supply core part 110 may be prepared by preparing a wire-type carrier made of a porous material and injecting a non-aqueous electrolyte into it.

Thereafter, a wire-type support 120 may be wound on the lithium ion supply core part 110.

A positive electrode active material layer 132 is formed on a positive electrode current collector 134, and a negative electrode active material layer 152 is formed on a negative electrode current collector 154. A general coating method may be applied to form each active material layer 132, 152 on each current collector 134, 154. For example, an electrode slurry containing an active material may be coated using a comma coater or a slot die coater.

The first electrode 130, which is a positive electrode, is wound on the support 120 to form a cable shape, and this is inserted into the separator 140 as shown in FIG. 4. After inserting the support 120 on which the first electrode 130 is wound into the separator 140, the separator 140 is heated to cause heat shrinkage. When the separator 140 is heat-shrunk, it may have a cross-section as shown in FIG. 2.

The separator 140 according to aspects of the present disclosure is not wound around the first electrode 130. Instead, because the wound first electrode 130 is inserted into the tube-shaped separator 140 and then heat-shrunk, the manufacture is very simple. In addition, since the separator 140 has a corrugated structure, it can sufficiently exhibit the flexibility required to deform into a desired shape, so formability is excellent.

The second electrode 150, which is a negative electrode, is wound around the separator 140, and packaging 170 may be formed to surround the second electrode 150. In some aspects, an aluminum pouch layer may be further formed between the packaging 170 and the second electrode 150.

Although the case where the first electrode 130 is a positive electrode and the second electrode 150 is a negative electrode has been described here, those skilled in the art will be able to easily infer the configuration in which the first electrode 130 is a negative electrode and the second electrode 150 is a positive electrode from the above content.

Although aspects of the present disclosure have been described in detail above, one of ordinary skill in the art to which the present disclosure belongs will be able to make many modifications to the present disclosure without departing from the spirit and scope of the disclosure as defined in the appended claims. Accordingly, future modifications of the aspects of the present disclosure will not depart from the art of the present disclosure.

### [Description of Reference Numerals]

100: CABLE-TYPE SECONDARY BATTERY
110: LITHIUM ION SUPPLY CORE PART
120: SUPPORT
130: FIRST ELECTRODE
132, 152: CURRENT COLLECTOR
134, 154: ACTIVE MATERIAL LAYER
140: SEPARATOR
141: FIRST PORTION
142: SECOND PORTION
150: SECOND ELECTRODE
170: PACKAGING

## Claims

1. A cable-type secondary battery, comprising:
a separator having a corrugated tube structure;
a first electrode extending within the separator having the corrugated tube structure; and
a second electrode surrounding the separator having the corrugated tube structure and extending along the first electrode.

2. The cable-type secondary battery of claim 1, wherein the separator is adhered to the first electrode by heat shrinkage.

3. The cable-type secondary battery of claim 1, wherein the separator is corrugated in a direction perpendicular to an extension direction of the separator.

4. The cable-type secondary battery of claim 3, wherein, when cut in an extension direction of the first electrode, a cross-sectional portion of the separator overlaps in a Z-shape.

5. The cable-type secondary battery of claim 4, wherein the cross-sectional portion of the separator is included in plural, and wherein the separator is continuous by repeating the overlapping portions having the Z-shape.

6. The cable-type secondary battery of claim 1, wherein the separator extends from a first end to a second end of the cable-type secondary battery, and wherein the separator has the corrugated tube structure for a portion of a total extension length thereof.

7. The cable-type secondary battery of claim 1, wherein the corrugated tube structure is a body of revolution obtained by rotating one side of a cross-section of the separator cut in the extension direction of the separator about a central axis.

8. The cable-type secondary battery of claim 7, wherein the separator having the corrugated tube structure is not spirally wound.

9. The cable-type secondary battery of claim 1, further comprising a flexible support disposed within the first electrode, wherein the first electrode is configured to surround and extend spirally around the flexible support.

10. The cable-type secondary battery of claim 1, further comprising a packaging surrounding an outer periphery of the second electrode.

11. A cable-type secondary battery, comprising:
a cable-type electrode assembly extending in a longitudinal direction, wherein the cable-type electrode assembly includes a first electrode, a second electrode, and a separator included between the first electrode and the second electrode;
a packaging surrounding an outer periphery of the cable-type electrode assembly; and
an electrolyte included in the packaging,
wherein the separator has a tube structure corrugated in a direction perpendicular to the longitudinal direction.

12. The cable-type secondary battery of claim 11, wherein the separator includes polypropylene, polyethylene, polyester, polyacetal, polyamide, polycarbonate, polyimide, polyetheretherketone, polyethersulfone, polyphenylene oxide, polyphenylene sulfide, polyethylene naphthalate, ethylene-butene copolymer, ethylene-hexene copolymer, or ethylene-methacrylate copolymer.

13. The cable-type secondary battery of claim 11, wherein, when cut in the extension direction of the separator, a cross-sectional portion of the separator has a sawtooth shape.

14. The cable-type secondary battery of claim 11, wherein the separator comprises repeating units in the longitudinal direction, and wherein each of the repeating units comprises:
a first portion having a first slope with respect to the longitudinal direction; and
a second portion having a second slope that is less than the first slope with respect to the longitudinal direction,
wherein the first portion and the second portion are adjacent to each other.

15. The cable-type secondary battery of claim 14, wherein the separator is adhered to an outside of the first electrode by heat shrinkage, and wherein, after the heat shrinkage, the first portion and the second portion respectively have a third slope and a fourth slope that are greater than the first slope and the second slope before the heat shrinkage.
